# EUROPÄISCHE PATENTSCHRIFT

(11) **EP 3 229 651 B1**
(45) Veröffentlichungstag und Bekanntmachung des Hinweises auf die Patenterteilung: **16.05.2018**
(21) Anmeldenummer: 17701800.9
(22) Anmeldetag: 12.01.2017
(51) Int. Cl.: A47J 31/42, A47J 42/00, F16H 1/36

(54) **KAFFEEMÜHLE SOWIE KAFFEEVOLLAUTOMAT MIT KAFFEEMÜHLE**
COFFEE MILL AND AUTOMATIC COFFEE MACHINE HAVING A COFFEE MILL
MOULIN À CAFÉ ET MACHINE À CAFÉ ENTIÈREMENT AUTOMATIQUE COMPRENANT UN MOULIN À CAFÉ

(30) Priorität: 02.03.2016 DE 102016103747
(43) Veröffentlichungstag der Anmeldung: 18.10.2017
(73) Patentinhaber: Eugster/Frismag AG, 8580 Amriswil (CH)
(72) Erfinder: EICHER, Heinz, 8645 Jona (CH)
(74) Vertreter: Patentanwälte Behrmann Wagner PartG mbB
(86) Internationale Anmeldenummer: PCT/EP2017/050520
(87) Internationale Veröffentlichungsnummer: WO 2017/148603

(56) Entgegenhaltungen:
- CN-U- 202 143 422
- DE-A1- 19 845 182
- DE-A1-102012 206 162
- US-A1- 2015 354 668

## Beschreibung

Die Erfindung betrifft eine Kaffeemühle gemäß dem Oberbegriff des Anspruchs 1, insbesondere zum Einbau in Kaffeevollautomaten, umfassend einen elektrischen Antriebsmotor zum Antreiben eines Mahlwerks, wobei zwischen Antriebsmotor und Mahlwerk ein als Planetengetriebe ausgebildetes Untersetzungsgetriebe angeordnet ist, dessen Sonnenrad von dem Antriebsmotor antreibbar ausgebildet und angeordnet ist.

Ferner betrifft die Erfindung einen Kaffeevollautomat gemäß Anspruch 10 mit einer integrierten Kaffeemühle.

In Kaffeevollautomaten kommen Kaffeemühlen zum Einsatz, die nach einer nutzerseitigen Produktauswahl automatisch aus Kaffee Bohnenkaffeemehl erzeugen, welches dann in einer Brüheinheit zur Herstellung eines Kaffeegetränks mit heißem Wasser ausgelaugt wird.

Bekannte, integrale Kaffeemühlen weisen den Nachteil einer als teilweise störend empfundenen, zu hohen Geräuschentwicklung auf und sind aufgrund ihrer großen Teileanzahl nur aufwendig montierbar und/oder instandsetzbar. Darüber hinaus ist die axiale Baulänge (entlang der Rotationsachse) integraler Kaffeemühlen verbesserungswürdig, da der Bauraum in einem Umgehäuse des Kaffeevollautomaten begrenzt ist.

Aus der DE 10 2012 206 162 A1 ist eine Küchenmaschine mit einem dreistufigen Planetengetriebe bekannt, wobei das Getriebesystem drei abtriebsseitige Ausgangswellen in koaxialer Geometrie aufweist.

Die DE 36 19 126 C1 zeigt eine als Getreidemühle ausgebildete Küchenmaschine mit einem Planetengetriebe.

Die US 2015/0257600 A1 beschreibt eine Gewürzmühle mit einem Planetengetriebe.

Ausgehend von dem vorgenannten Stand der Technik liegt der Erfindung die Aufgabe zugrunde, eine verbesserte Kaffeemühle zum Einsatz in Kaffeevollautomaten anzugeben. Bevorzugt soll diese sich durch eine im Vergleich mit dem Stand der Technik reduzierte Teilezahl auszeichnen sowie eine möglichst geringe axiale Baulänge aufweisen. Vorzugsweise soll die Geräuschentwicklung der Kaffeemühle reduziert sein.

Ferner besteht die Aufgabe darin, einen mit einer entsprechend verbesserten Kaffeemühle ausgestatteten Kaffeevollautomat anzugeben.

Diese Aufgabe wird hinsichtlich der Kaffeemühle mit den Merkmalen des Anspruchs 1 gelöst, d.h. bei einer gattungsgemäßen Kaffeemühle dadurch, dass das Planetengetriebe mehrere in Umfangsrichtung um das Sonnenrad angeordnete Planetenstangen aufweist, die einen mit dem Sonnenrad kämmenden ersten Axialabschnitt und einen axial benachbarten, bevorzugt unmittelbar angrenzenden, einen von einem ersten Durchmesser des ersten Axialabschnittes unterschiedlichen, bevorzugt geringeren, zweiten Durchmesser aufweisenden zweiten Axialabschnitt umfassen, der mit einem feststehenden Hohlrad kämmt, und dass die Zahnstangen mit ihren ersten Axialabschnitten ein Abtriebselement (zum Antreiben des Mahlwerks) antreibend angeordnet sind. Die Axialabschnitte rotieren mit derselben Geschwindigkeit sowohl um die jeweilige Planetenstangendrehachse als auch um die parallel zu den Planetendrehachsen angeordnete Rotationsachse des Sonnenrades, die bevorzugt axial mit einer Antriebsmotordrehachse fluchtet.

Hinsichtlich des Kaffeevollautomaten wird die Aufgabe mit den Merkmalen des Anspruchs 10 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, bei einem Planetengetriebe einer, bevorzugt in einen Kaffeevollautomaten integrierbaren und/oder integrierten Kaffeemühle die Planetenräder als Planetenstangen mit einer entsprechend großen Axialerstreckung auszubilden und diese Planetenstangen mit zwei axial benachbarten, entweder axial beabstandeten oder bevorzugt unmittelbar axial aneinander angrenzenden Axialabschnitten für zwei unterschiedliche Getriebestufen auszustatten, wobei sich die Axialabschnitte hinsichtlich ihres senkrecht zur Rotationsachse des Sonnenrades gemessenen Durchmessers und bevorzugt auch ihrer Zähnezahl unterscheiden. Dabei sind die Planetenstangen um eine von dem mittels des elektromotorischen Antriebs angetriebenen Sonnenrad definierte Drehachse (Rotationsachse) angeordnet, wobei das Sonnerad mit den ersten Axialabschnitten der Planetenstangen kämmt, und wobei die ersten Axialabschnitte bevorzugt einen größeren, senkrecht zur vorgenannten Rotationsachse gemessenen Durchmesser aufweisen als die zweiten Axialabschnitte. Da immer ein erster Axialabschnitt und ein zweiter Axialabschnitt an einer gemeinsamen Planetenstange ausgebildet sind, rotieren diese mit derselben Rotationsgeschwindigkeit um die jeweilige, sich parallel zur vorgenannten Drehachse des Sonnenrades erstreckenden Planetenstangendrehachse. Mit ihren zweiten Axialabschnitten kämmen die Planetenstangen mit einem feststehenden, bevorzugt einteilig mit einem Getriebegehäuse ausgebildeten Hohlrad, d.h. einer Hohlradinnenverzahnung, wodurch die Planetenstangen um die Drehachse des Sonnenrades rotieren. Aufgrund dieser Drehbewegung und der kämmenden Anordnung der ersten Axialabschnitte mit einem Abtriebselement treiben die ersten Axialabschnitte das Abtriebselement rotierend um die Drehachse des Sonnenrades an.

Eine nach dem Konzept der Erfindung ausgebildete Kaffeemühle hat gegenüber bekannten Kaffeemühlen erhebliche Vorteile. So ist die Teilezahl aufgrund des Vorsehens von Getriebestufen übergreifenden Planetenstangen gering, was die Montage und Instandsetzung erleichtert. Darüber hinaus wird die axiale Baulänge (entlang der vorgenannten Drehachse des Sonnenrades) reduziert. Ein weiterer wesentlicher Vorteil ist, dass sich trotz der reduzierten Teilezahl und des reduzierten Bauraums mit der erfindungsgemäßen Anordnung hohe Untersetzungsverhältnisse realisieren lassen. Darüber hinaus ist die Geräuschentwicklung deutlich geringer als bei bekannten Kaffeemühlen, insbesondere dann, wenn, was in Weiterbildung der Erfindung vorgesehen ist, das Sonnenrad und die ersten Axialabschnitte zum miteinander Kämmen sowie die Innenverzahnung des Abtriebselements zum Kämmen mit den ersten Axialabschnitten, mit einer Schrägverzahnung versehen sind, also mit in Umfangsrichtung nebeneinander angeordneten Zähnen, deren axiale Enden jeweils nicht auf demselben Umfangswinkel um die Rotationsachse des Sonnenrades angeordnet sind, sondern auf unterschiedlichen Umfangswinkeln, also in Umfangsrichtung um die Drehachse des Sonnerades beabstandet sind, so dass sich die Zähne bzw. Zahnflanken nicht geradlinig axial erstrecken, sondern bei ihrer Axialerstreckung gleichzeitig in Umfangsrichtung geneigt sind.

Im Hinblick auf die Realisierung einer besonders reduzierten Axialerstreckung hat es sich als vorteilhaft herausgestellt, wenn eine das Sonnenrad antreibende Welle eine die zweiten Axialabschnitte umfassende zweite Getriebestufe axial durchsetzt, wobei diese zweite Getriebestufe axial benachbart ist zu der das Sonnenrad und die ersten Axialabschnitte umfassenden ersten Getriebestufe. Bei der Welle kann es sich um eine einteilige oder mehrteilige Welle handeln, die abschnittsweise oder vollständig von der Motorwelle des Antriebsmotors gebildet ist oder von einer von der Antriebsmotorwelle separaten Welle.

Im Hinblick auf eine kostengünstige und geräuschoptimierte Ausbildung der Zahnstangen hat es sich als vorteilhaft erwiesen, diese monolithisch auszubilden, insbesondere in Form von Kunststoffspritzgussteilen.

Wie bereits erwähnt, ist es aufgrund der speziellen Kaffeemühlengetriebeausgestaltung möglich, große Untersetzungsverhältnisse zu realisieren. Ganz besonders bevorzugt ist es, wenn die Durchmesser der Axialabschnitte so aufeinander abgestimmt sind, dass mittels des Planetengetriebes ein Untersetzungsverhältnis von größer als 20:1, bevorzugt größer als 25:1, noch weiter bevorzugt von größer als 30:1 realisiert ist. Besonders gute Erfahrungen wurden mit einem Untersetzungsverhältnis von etwa 32:1 gemacht.

Konstruktiv von besonderem Vorteil ist eine Ausführungsform, wonach das, mit den zweiten Axialabschnitten kämmende, feststehende (also drehfest angeordnete) Hohlrad am Innenumfang eines Getriebegehäuses ausgebildet ist, das die ersten und zweiten Axialabschnitte radial außen umgibt. Anders ausgedrückt ist das feststehende Hohlrad als Innenverzahnung eines Getriebegehäuses realisiert, dessen Axialerstreckung die beiden Axialabschnitte der Planetenräder umschließt. Ganz besonders bevorzugt ist, wenn das Abtriebselement, insbesondere über ein Wälzlager innerhalb dieses Getriebegehäuses gelagert ist und bevorzugt einen axialen Abschluss für das Getriebegehäuse bildet. Mit anderen Worten ist es zweckmäßig, wenn sich das Abtriebselement axial in einen Bereich radial zwischen den ersten Axialabschnitten und den Innenumfang des Getriebegehäuses erstreckt, an welchem sich das Abtriebselement, insbesondere über ein Wälzlager in radialer Richtung nach außen abstützt.

Besonders zweckmäßig ist es zur Bildung einer Einheit aus Planetengetriebe und Antriebsmotor, wenn das Getriebegehäuse, beispielsweise durch eine axiale Verschraubung an einem Motorgehäuse des Antriebsmotors drehfest fixiert ist.

Besonders bevorzugt handelt es sich bei dem Abtriebselement, zumindest an dem den Planetenstangen zugewandten Endbereich um eine Hohlwelle, die am Innenumfang eine Verzahnung, insbesondere eine schräge Verzahnung zum Kämmen mit den ersten Axialabschnitten aufweist.

Besonders zweckmäßig ist es, wenn das Abtriebselement drehfest mit einer Auswerferscheibe gekoppelt ist, wie diese bei Kaffeemühlen von Kaffeevollautomaten häufig zum Einsatz kommt, um das aus dem Mahlwerk austretende Kaffeemehl radial nach außen in Richtung einer Brühkammer zu transportieren. Weiter bevorzugt ist es dabei, wenn die Auswerferscheibe drehfest, insbesondere über eine Rutschkupplung, mit einem rotierbaren Mahlelement gekoppelt ist, welches mittels des Antriebsmotors über das Planetengetriebe antreibbar ist.

Die Erfindung führt auch auf einen Kaffeevollautomat mit einer Brüheinheit und einer erfindungsgemäßen Kaffeemühle, wobei Kaffeemühle und Brüheinheit derart wirkverbunden sind, dass das bei einem Mahlvorgang mittels der Kaffeemühle erzeugte Kaffeemehl in die Brüheinheit gelangt und dort durch Heißwasserzugabe ausgelaugt und somit ein Kaffeegetränk hergestellt werden kann.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Explosionsdarstellung der Kombination aus Antriebsmotor, Planetengetriebe sowie Auswerferscheibe einer Kaffeemühle zur Integration in einen Kaffeevollautomaten (auf die Darstellung weiterer Mahlwerkskomponenten, wie beispielsweise eines Mahlkegels und eines Mahlrings wurde aus Übersichtlichkeitsgründen verzichtet),
- Fig. 2:: eine Längsschnittdarstellung der Kombination aus Fig. 1,
- Fig. 3:: eine Schnittdarstellung entlang der Schnittlinie D - D gemäß Fig. 2, und
- Fig. 4:: eine Schnittdarstellung entlang der Schnittlinie E - E gemäß Fig. 2, wobei diese Blickrichtung diejenige ist, die die Drehrichtungen im Uhrzeigersinn bzw. im Gegenuhrzeigersinn definiert.

In den Figuren sind gleiche Elemente und Elemente mit der gleichen Funktion mit den gleichen Bezugszeichen gekennzeichnet.

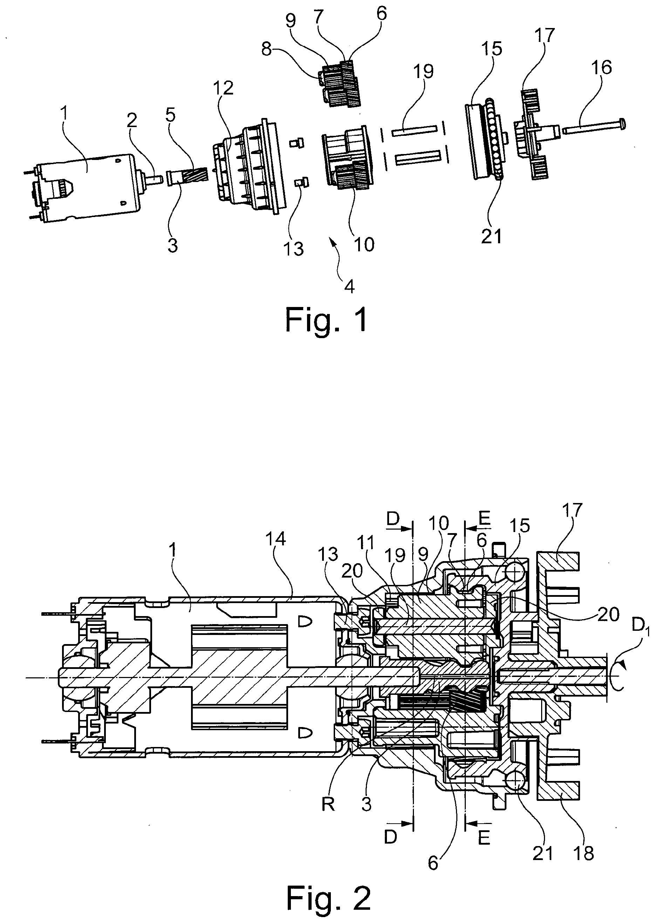

In Fig. 1 ist in der Zeichnungsebene links ein elektrischer Antriebsmotor 1 einer Kaffeemühle eines Kaffeevollautomaten gezeigt.

Über eine Motorwelle 2 ist der Antriebsmotor 1 mit einem Sonnenrad 3 eines als Planetengetriebe ausgebildeten Untersetzungsgetriebes 4 gekoppelt. Zu erkennen ist, dass das Sonnenrad 3 an seinem Außenumfang eine Schrägverzahnung 5 aufweist, mit der es mit einer ebenfalls schrägen Gegenverzahnung 6 von ersten Axialabschnitten 7 von außenumfänglich monolithischen Planetenstangen 8 kämmt. Die Planetenstangen 8 sind in Umfangsrichtung um das Sonnenrad 3 ausgebildet und weisen jeweils neben einem ersten, schräg verzahnten Axialabschnitt 7 einen axial benachbarten, hier unmittelbar angrenzenden zweiten Axialabschnitt 9 auf, der einen geringeren Durchmesser aufweist als der benachbarte erste Axialabschnitt 7. Die zweiten Axialabschnitte 9 kämmen mit ihrer jeweiligen Außenverzahnung 10 mit einem drehfest angeordneten Hohlrad 11, genauer mit einer Innenverzahnung (vgl. Fig. 2), die einteilig mit sowie am Innenumfang eines Getriebegehäuses 12 angeordnet ist, welches axial über Fixierschrauben 13 an einem Motorgehäuse 14 des Antriebsmotors 1 festgelegt ist.

Die Gegenverzahnung 6 der ersten Axialabschnitte 7 kämmen mit einem als Hohlwelle ausgebildeten Abtriebselement 15, welches stirnseitig das sich axial über die gesamte Länge der Planetenstangen 8 erstreckende Getriebegehäuse 12 auf der vom Antriebsmotor 1 abgewandten Axialseite verschließt. Drehfest mit dem Abtriebselement 15 ist eine Auswerferscheibe 17 des Mahlwerks gekoppelt, welche Auswerferflügel 18 über den Umfang verteilt trägt, um Mahlgut, d.h. Kaffeemehl in radialer Richtung nach außen, hin zu einer nicht gezeigten Brüheinheit auszutragen. Dabei ist bevorzugt zwischen Auswerferscheibe 17 und einem Mahlelement, insbesondere einem Mahlring oder einem darin angeordneten Kegel eine Rutschkupplung realisiert. In dem gezeigten Ausführungsbeispiel weisen die Planetenstangen jeweils eine Stangendrehachse 19 auf, die die jeweilige Planetenstange 8 axial durchsetzt und in axial benachbarten Halterungen 20 (vgl. Fig. 2) aufgenommen sind.

In Fig. 1 ist mit dem Bezugszeichen 16 ein als Schraube ausgebildetes Fixierelement zur axialen Sicherung eines Mahlelementes an der Auswerferscheibe 17 gezeigt.

Aus Fig. 2 ergibt sich, dass sich das Abtriebselement 15 über ein als Kugellager ausgebildetes Wälzlager 21 in radialer Richtung nach außen am Getriebegehäuse 12 abstützt, welches das feststehende Hohlrad 11 bildet, indem es am Innenumfang eine einteilig mit dem Getriebegehäuse 12 ausgebildete Innenverzahnung aufweist.

Aus Fig. 2 ist weiter zu erkennen, dass eine von der Motorwelle 2 sowie einem unteren Abschnitt des Sonnenrades 3 gebildete Welle die zweiten Axialabschnitte 9 bzw. einen von diesen begrenzten Zwischenraum (radialer Innenraum/Zentrum) in axialer Richtung durchsetzt, so dass das Sonnenrad 3 in verzahnten Eingriff kommt mit der schrägen Gegenverzahnung 6 der ersten Axialabschnitte 7.

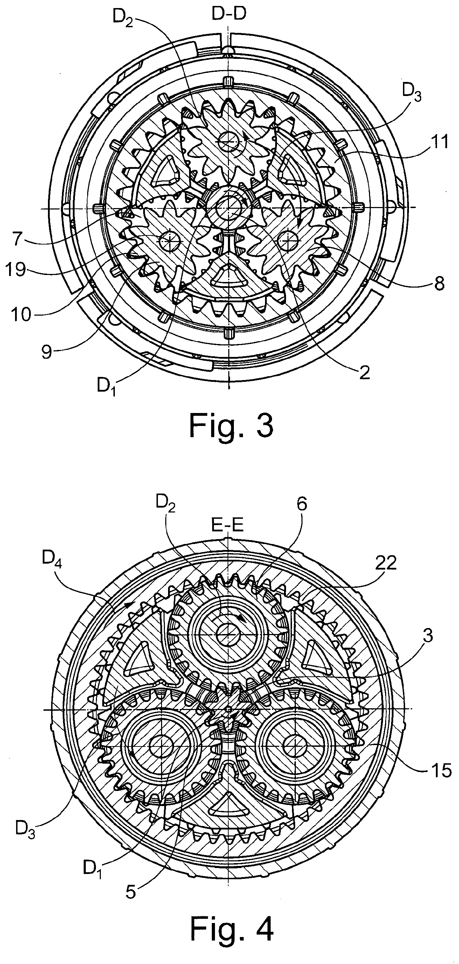

Wird der Antriebsmotor 1 betrieben, rotiert das Sonnenrad 3 mit Blickrichtung von einem Mahlwerk in Richtung des Getriebes bzw. in Richtung des Antriebsmotors, d.h. in den Fig. 1 und 2 von rechts nach links, beispielsweise im Gegenuhrzeigersinn, wie in den Fig. 2 und Fig. 4 angedeutet, und zwar um eine Drehachse bzw. Rotationsachse R, parallel zu der die Stangendrehachsen 19 angeordnet sind. Aufgrund des Schrägverzahnungseingriffs von Schrägverzahnung 5 und schräger Gegenverzahnung 6 rotieren die Planetenstangen 8 um ihre jeweilige Stangendrehachse 19 im Uhrzeigersinn. Da die Planetenstangen 8 mit der Verzahnung ihrer zweiten Axialabschnitte 9 mit dem feststehenden Hohlrad 11 kämmen bewegen sich die Planetenstangen 8 in Umfangsrichtung um die Rotationsachse R, und zwar ebenfalls im Gegenuhrzeigersinn, wie sich aus der Darstellung gemäß Fig. 3 ergibt, wobei zu beachten ist, dass die Blickrichtung der oben genannten Darstellung gemäß Fig. 3 der Blickrichtung gemäß Fig. 4 zur Definition der Drehrichtungen entgegengesetzt ist. Zu erkennen ist dort die Drehrichtung D₁ der Welle 2 sowie die daraus resultierenden, Drehrichtungen D₂ der Planetenstangen 8 um ihre jeweilige Planetenstangendrehachse 19. Aufgrund der kämmenden Anordnung der zweiten Axialabschnitte 9 mit dem feststehenden Hohlrad 11 rotiert die Planetenstangenanordnung 19 in einer Drehrichtung D₃, die mit der Drehrichtung D₁ übereinstimmt. Aufgrund des Schrägverzahnungseingriffs der Gegenverzahnung 6 mit einer schrägen Innenverzahnung 22 des Abtriebselementes 15 wird dieses in der Drehrichtung D₄ verdreht, die mit der Drehrichtung D₂ zusammenfällt.

Die konkrete gezeigte Variante des Planetengetriebes weist ein Untersetzungsverhältnis von 32,4:1 auf.

### Bezugszeichen

- 1: elektrischer Antriebsmotor
- 2: Motorwelle
- 3: Sonnenrad
- 4: Untersetzungsgetriebe
- 5: Schrägverzahnung
- 6: schräge Gegenverzahnung
- 7: erste Axialabschnitte
- 8: Planetenstangen
- 9: zweite Axialabschnitte mit kleinerem Durchmesser als die ersten Axialabschnitte
- 10: Außenverzahnung
- 11: feststehendes Hohlrad (feststehende Innenverzahnung)
- 12: Getriebegehäuse
- 13: Fixierschrauben
- 14: Motorgehäuse
- 15: Abtriebselement
- 16: Fixierelement
- 17: Auswerferscheibe
- 18: Auswerferflügel
- 19: Stangendrehachsen
- 20: Halterungen
- 21: Wälzlager
- 22: schräge Innenverzahnung

- R: Rotationsachse (Drehachse des Sonnenrades)
- D₁: Drehrichtung Sonnenrad um Rotationsachse
- D₂: Rotationsrichtung der Planentenstangen um Stangendrehachsen
- D₃: Rotationsrichtung der Planentenstangen um Rotationsachse R
- D₄: Drehrichtung des Abtriebselementes

## Patentansprüche

1. Kaffeemühle, insbesondere zum Einbau in Kaffeevollautomaten, umfassend einen elektrischen Antriebsmotor (1) zum Antreiben eines Mahlwerks, wobei zwischen Antriebsmotor (1) und Mahlwerk ein als Planetengetriebe ausgebildetes Untersetzungsgetriebe (4) angeordnet ist, dessen Sonnenrad (3) von dem Antriebsmotor (1) antreibbar ist,
**dadurch gekennzeichnet,**
**dass** das Planetengetriebe mehrere in Umfangsrichtung um das Sonnenrad (3) angeordnete Planetenstangen (8) aufweist, die einen mit dem Sonnenrad (3) kämmenden ersten Axialabschnitt (7) und einen axial benachbarten, einen von einem ersten Durchmesser des ersten Axialabschnittes (7) unterschiedlichen, bevorzugt geringeren, zweiten Durchmesser aufweisenden zweiten Axialabschnitt (9) umfassen, der mit einem feststehenden Hohlrad (11) kämmt, und dass die Zahnstangen mit ihren ersten Axialabschnitten (7) ein Abtriebselement (15) antreibend angeordnet sind.

2. Kaffeemühle nach Anspruch 1,
**dadurch gekennzeichnet,**
**dass** das Sonnenrad (3), die ersten Axialabschnitte (7) und das Abtriebselement (15) eine Schrägverzahnung (5) aufweisen, bei der die axialen Zahnenden der Zähne in Umfangsrichtung beabstandet sind.

3. Kaffeemühle nach einem der Ansprüche 1 oder 2,
**dadurch gekennzeichnet,**
**dass** die zweiten Axialabschnitte (9) radial benachbart zu einer den Antrieb mit dem Sonnenrad (3) koppelnde Welle angeordnet sind, die einen Zwischenbereich zwischen den zweiten Axialabschnitten (9) axial durchsetzt.

4. Kaffeemühle nach einem der vorhergehenden Ansprüche,
**dadurch gekennzeichnet,**
**dass** die Planetenstangen monolithisch, insbesondere als Kunststoffspritzgussteile ausgebildet sind.

5. Kaffeemühle nach einem der vorhergehenden Ansprüche,
**dadurch gekennzeichnet,**
**dass** das Planetengetriebe ein Untersetzungsverhältnis von größer als 20:1, bevorzugt größer als 25:1, noch weiter bevorzugt von größer als 30:1, bevorzugt zwischen 30:1 und 50:1, aufweist.

6. Kaffeemühle nach einem der vorhergehenden Ansprüche,
**dadurch gekennzeichnet,**
**dass** das feststehende Hohlrad (11) am Innenumfang eines Getriebegehäuses (12) ausgebildet ist, das die ersten (7) und zweiten Axialabschnitte (9) radial außen umgibt.

7. Kaffeemühle nach Anspruch 6,
**dadurch gekennzeichnet,**
**dass** das Getriebegehäuse (12), insbesondere axial, an einem Gehäuse des Antriebsmotors (1) drehfest fixiert ist.

8. Kaffeemühle nach einem der vorhergehenden Ansprüche,
**dadurch gekennzeichnet,**
**dass** das Abtriebselement (15) zumindest abschnittweise als Hohlwelle ausgebildet ist.

9. Kaffeemühle nach einem der vorhergehenden Ansprüche,
**dadurch gekennzeichnet,**
**dass** zwischen Planetengetriebe und Mahlwerk eine Rutschkupplung angeordnet ist und/oder dass das Abtriebselement (15) eine Auswerferscheibe (17) antreibend angeordnet ist, die, bevorzugt über die Rutschkupplung, mit einem rotierbaren Mahlelement gekoppelt ist.

10. Kaffeevollautomat, umfassend eine Kaffeemühle nach einem der vorhergehenden Ansprüche sowie eine Brüheinheit zum Auslagen des mit der Kaffeemühle hergestellten Kaffeemehls.

## Claims

1. A coffee mill, in particular for installation in automatic coffee machines, comprising an electric drive motor (1) for driving a grinder, a reduction gearing (4) configured as a planetary gearing being disposed between the drive motor (1) and the grinder, the sun gear (3) of the planetary gearing being driven by the drive motor (1),
**characterized in that**
the planetary gearing has multiple planetary rods (8) disposed around the sun gear (3) in the circumferential direction, the planetary rods (8) comprising a first axial portion (7) which meshes with the sun gear (3) and an axially adjacent second axial portion (9) which has a second diameter, which is different from, preferably smaller than, a first diameter of the first axial portion (7), the second axial portion (9) meshing with a fixed ring gear (11), and **in that** the gear rods are disposed in such a manner that their first axial portions (7) drive an output element (15).

2. The coffee mill according to claim 1,
**characterized in that**
the sun gear (3), the first axial portions (7) and the output element (15) have helical toothing (5) in which the axial tooth ends of the teeth are spaced apart in the circumferential direction.

3. The coffee mill according to any one of claims 1 or 2,
**characterized in that**
the second axial portions (9) are disposed radially adjacent to a shaft that couples the drive to the sun gear (3) and axially traverses an intermediate area between the second axial portions (9).

4. The coffee mill according to any one of the preceding claims,
**characterized in that**
the planetary rods are monolithic parts, in particular plastic injection-molded parts.

5. The coffee mill according to any one of the preceding claims,
**characterized in that**
the planetary gearing has a reduction ratio of higher than 20:1, preferably higher than 25:1, more preferably higher than 30:1, preferably between 30:1 and 50:1.

6. The coffee mill according to any one of the preceding claims,
**characterized in that**
the fixed ring gear (11) is formed on the inner circumference of a gearing housing (12) that radially surrounds the first (7) and second axial portions (9) at the outside.

7. The coffee mill according to claim 6,
**characterized in that**
the gearing housing (12) is fixed, in particular axially, to a housing of the drive motor (1) in a non-rotating manner.

8. The coffee mill according to any one of the preceding claims,
**characterized in that**
at least in sections, the output element (15) is a hollow shaft.

9. The coffee mill according to any one of the preceding claims,
**characterized in that**
a friction clutch is disposed between the planetary gearing and the grinder and/or **in that** the output element (15) is disposed so as to drive an ejector disk (17) which is coupled, preferably via the friction clutch, to a rotating grinding element.

10. An automatic coffee machine, comprising a coffee mill according to any one of the preceding claims and a brewing unit for leaching the coffee grounds produced using the coffee mill.

## Revendications

1. Moulin à café, en particulier pour l'intégration dans des machines à café automatiques, comprenant un moteur d'entraînement électrique (1) pour entraîner un broyeur, un engrenage réducteur (1) configuré comme engrenage planétaire (4), dont le soleil (3) est entraîné par le moteur d'entraînement (1), étant disposé entre le moteur d'entraînement (1) et le broyeur,
**caractérisé en ce que**
l'engrenage planétaire comporte plusieurs barres planétaires (8) qui sont disposées autour du soleil (3) dans la direction circonférentielle et qui comprennent une première partie axiale (7) engrenant avec le soleil (3) et une deuxième partie axiale (9) axialement adjacente, ayant un deuxième diamètre différent de, de préférence inférieure à, un premier diamètre de la première partie axiale (7) et engrenant avec une couronne (11) fixe, et **en ce que** les barres dentées sont disposées de manière à entraîner un élément de sortie (15) par leurs premières parties axiales (7).

2. Moulin à café selon la revendication 1,
**caractérisé en ce que**
le soleil (3), les premières parties axiales (7) et l'élément de sortie (15) présentent une denture hélicoïdale (5) dans laquelle les extrémités axiales des dentes sont espacées dans la direction circonférentielle.

3. Moulin à café selon l'une quelconque des revendications 1 ou 2,
**caractérisé en ce que**
les deuxièmes parties axiales (9) sont disposées radialement adjacentes à un arbre qui couple l'entraînement au soleil (3) et qui traverse axialement une région intermédiaire entre les deuxièmes parties axiales (9).

4. Moulin à café selon l'une quelconque des revendications précédentes,
**caractérisé en ce que**
les barres planétaires sont des pièces monolithiques, en particulier des pièces plastiques moulées par injection.

5. Moulin à café selon l'une quelconque des revendications précédentes,
**caractérisé en ce que**
l'engrenage planétaire présente un rapport de réduction supérieur à 20 : 1, de préférence supérieure à 25 : 1, plus préférablement supérieure à 30 : 1, de préférence entre 30 : 1 et 50 : 1.

6. Moulin à café selon l'une quelconque des revendications précédentes,
**caractérisé en ce que**
la couronne (11) fixe est formée sur la circonférence intérieure d'un boîtier d'engrenage (12) qui entoure radialement les premières (7) et deuxièmes parties axiales (9) à l'extérieure.

7. Moulin à café selon la revendication 6,
**caractérisé en ce que**
le boîtier d'engrenage (12) est fixé, en particulier axialement, sur un boîtier du moteur d'entraînement (1) de manière non-rotative.

8. Moulin à café selon l'une quelconque des revendications précédentes,
**caractérisé en ce que**
l'élément de sortie (15) est configuré comme arbre creux au moins par sections.

9. Moulin à café selon l'une quelconque des revendications précédentes,
**caractérisé en ce qu'**
un accouplement à friction est disposé entre l'engrenage planétaire et le broyeur et/ou **en ce que** l'élément de sortie (15) est disposé de manière à entraîner un disque d'éjection (17) qui est couplé, de préférence par l'accouplement à friction, à un élément de broyage rotatif.

10. Machine à café automatique, comprenant un moulin à café selon l'une quelconque des revendications précédentes ainsi qu'une unité de percolation pour lessiver le café moulu produit à l'aide du moulin à café.
